# EUROPÄISCHE PATENTANMELDUNG

(11) **EP 2 083 412 A1**
(43) Veröffentlichungstag der Anmeldung: **29.07.2009**
(21) Anmeldenummer: 08405023.6
(22) Anmeldetag: 25.01.2008
(51) Int. Cl.: G09F 3/03, G06Q 10/00

(54) **Überwachungseinrichtung**

(71) Anmelder: SmTAG international AG, CH-8620 Wetzikon (CH)
(72) Erfinder: Bajka, Daniel, 8620 Wetzikon (CH); Pavel, Urban, 8620 Wetzikon (CH)
(74) Vertreter: Hammer, Bruno

(57) **Zusammenfassung**

Einrichtung eignet sich zum Überwachen der gegenseitigen Lage von Teilen einer Vorrichtung, der Position von Vorrichtungen, wie Türen und Deckel, von Behältern, von Gebäuden oder von Fahrzeugen und/oder zum Überwachen der örtlichen Lage von derartigen Vorrichtungen.

Die Einrichtung weist eine oder mehrere Sensoreinheiten (1) sowie eine oder mehrere Siegeleinheit (12) auf. Die Siegeleinheit (12) weist oder mehrere Leiterbahnen auf. Die Siegeleinheit (12) wird zwischen zu überwachenden Teilen und/oder zwischen Teilen und der Vorrichtung wie Behälter, Gebäude, Fahrzeug angebracht.

Eine elektronische Überwachungseinheit (11), ist mit der oder den Siegeleinheiten (12) elektrisch und mechanisch verbunden.

Weiter umfass die Einrichtung einen Sender (112) oder einen Sender-Empfänger (112). Die Überwachungseinheit (11) erzeugt ein Alarmsignal, wenn die Leiterbahn oder die Leiterbahnen einer Siegeleinheit (12) beschädigt, insbesondere unterbrochen ist, und/oder wenn die Vorrichtung mit der Sensoreinheit (1) einen vorgegebenen örtlichen Bereich verlässt.

Die Einrichtung umfasst weiter eine Relaisstation (2) mit einem Empfänger (21) für Signale (31) der Sensoreinheit (11). Die Relaisstation weist eine Auswerteeinheit (22) zum Verarbeiten und/oder zum Weiterleiten von Alarmsignalen (35) an Geräte (26) zum Empfangen der Alarmsignale (35) der Sensoreinheit (1), bzw. der Relaisstation (2).

## Beschreibung

Die Erfindung bezieht sich auf eine Einrichtung zum Überwachen der gegenseitigen Lage von Teilen einer Vorrichtung nach dem Oberbegriff des unabhängigen Anspruchs 1.

Deckel und Türen von Behältern werden heute z-B. mit Klebestreifen and anderen Siegeln gesichert. Ein Nachteil dieser bekannten Siegel ist, dass sie relativ einfach aufgebrochen und wieder verschlossen werden können. Zudem werden zerstörte Siegel nicht sofort, sondern häufig erst nach Stunden, Tagen oder gar Wochen erkannt.

Hier bringt die Einrichtung zum Überwachen nach der Erfindung wesentliche Besserung. Das Aufbrechen eines Siegels wird praktisch sofort erkannt, was einerseits dazu führt, dass häufig schon gar nicht versucht wird, das Siegel aufzubrechen und unberechtigt zum Inhalt eines mit der neuen Einrichtung zum Überwachen geschützten Ware im Behälter zu gelangen.

Die Aufgabe der Erfindung wird mit einer Einrichtung zum Überwachen gelöst, welche die Merkmale im Kennzeichen des unabhängigen Anspruchs 1 gelöst.

Die abhängigen Ansprüche beziehen sich auf vorteilhafte Weiterbildung der Erfindung,

So ist es bei einer besonders vorteilhaften Ausführungsform möglich, die Lage der mit der neuen Einrichtung zum Überwachen geschützten Vorrichtung in einem bestimmten örtlichen Bereich zu überwachen. Es ist dann also auch nicht möglich, eine Vorrichtung bei welcher das Siegel unverletzt ist, als Ganzes zu verschieben, bzw. zu entwenden. Verlässt die mit der neuen Einrichtung zum Überwachen geschützte Vorrichtung einen vorbestimmbaren Bereich, beispielsweise einen Bereich in einem Lager wird ein Alarm ausgelöst. Dies kann erreicht werden, indem die Sensoreinheit der Einrichtung zum Überwachen entsprechend ausgelegt ist, und die Lage der Sensoreinheit der zu schützenden Vorrichtung z.B. mit dem GPS überwacht wird.

Elektronische Überwachung von Türen und Transportbehälter kann beispielsweise wie folgt erfolgen.

Die Überwachungseinrichtungen werden verwendet, um z.B. Türen an Fahrzeugen oder Gebäuden oder Verschlüsse an Transportbehältern zu überwachen. Es kann mit der Einrichtung zum Überwachen festgestellt werden, wenn eine Türe oder ein Behälter geöffnet worden ist. Gleichzeitig kann erkannt werden, wenn ein Transportbehälter aus einem überwachten Bereich entfernt wird oder die Sensoreinheit defekt oder zerstört ist.

Die Erfindung wird anhand der schematischen Zeichnung, welche ein Beispiel der Funktionsweise eines Überwachungssystems mit wenigstens einer Einrichtung zum Überwachen nach der Erfindung enthält. Weiter wird das Arbeitsprinzip einer Einrichtung zum Überwachen näher erklärt.

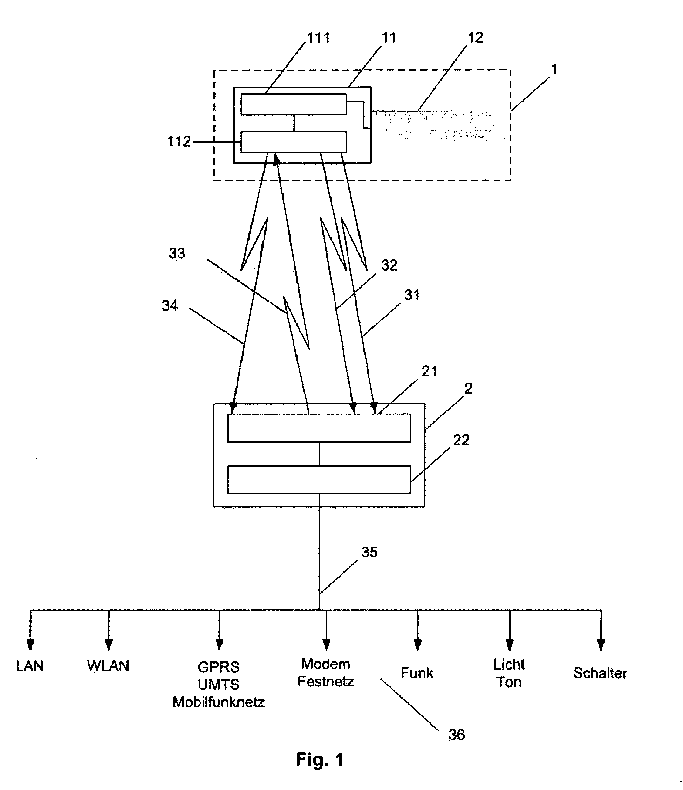

Die einzige Fig. 1 zeigt das Schema einer Überwachungsanlage mit einer oder mehreren Einrichtungen zum Überwachen nach der Erfindung.

Die Einrichtung zum Überwachen besteht aus einer oder mehreren Sensoreinheiten (1) und einer oder mehreren Relaisstationen (2).
Jede Sensoreinheit (1) besteht aus einer wieder verwendbaren elektronischen Überwachungseinheit (11) und einer für jeden neuen Einsatz zu ersetzenden, auswechselbaren elektronischen Siegeleinheit (12).

Die Überwachungseinheit (11) der Sensoreinheit (1) ist mit der Siegeleinheit (12) vorzugsweise lösbar verbunden. Die Verbindung ist mit Vorteil so ausgestaltet, dass die Siegeleinheit (12) einfach gewechselt werden kann.

Die Siegeleinheit (12) lässt sich an die z.B. zu überwachende Türen oder Deckel oder an Behälter und Türe, Deckel von z.B. Behältern befestigen, z.B. kleben. Bei zweiteiligen Türen und Deckeln wird die Siegeleinheit (12) mit jedem der beiden Teile verbunden. Bei einteiligen Türen und Deckeln wird die Siegeleinheit (12) am Behälter und an der Türe, bzw. dem Deckel befestigt. Dies ist auch möglich bei zwei- und mehrteiligen Türen und Deckeln der Behälter bzw. der zu überwachenden Vorrichtung. Die Siegeleinheit (12) ist so ausgestaltet, dass sie zerstört wird, wenn sie entfernt wird oder wenn die Türe am Behälter z.B. eines Transportbehälters geöffnet wird. Wird die Siegeleinheit (12) zerstört, wird damit auch die durch sie verlaufende Leiterbahn und damit ein Stromkreis unterbrochen, was das in der Überwachungseinheit (1) eine Signal erzeugt, bzw. auslöst.

Die mit der Siegeleinheit (12) verbundene Überwachungseinheit (11) überwacht also die Siegeleinheit. Sobald der durch die Siegeleinheit verlaufende Stromkreis unterbrochen wird, registriert dies die Überwachungseinheit. Der unterbrochene Stromkreis bedeutet, dass entweder die Siegeleinheit zerstört oder ausgewechselt worden ist.

Sobald die Überwachungseinheit einen Unterbruch des Stromkreises registriert, kann diese das Ereignis im internen Alarmspeicher mit einem entsprechenden Zeitstempel speichern. Gleichzeitig wird in der Sendeeinheit (112) der Überwachungseinheit eine Alarmsignal erzeugt. Diese Sendeeinheit übermittelt die Alarmmeldung (31) an den Empfänger (21) in einer Relaisstation (2) ist. Die Sendeeinheit wiederholt die Alarmmeldung mehrmals.

Der Empfänger (21) übermittelt die Alarmmeldung an die Auswerteeinheit (22). Diese Auswerteeinheit (22) übermittelt eine Alarmmeldung (35) an eines oder mehrere Empfangsgeräte (36) sobald sie die Alarmmeldung (31) von der Sensoreinheit von der Sendeeinheit (112) der Sensoreinheit (1) empfangen hat.

Die Sendeeinheit (112) sendet zusätzlich in regelmässigen Abständen ein Anwesenheitssignal (32) an den Empfänger (21) der Relaisstation (2). Dieser übermittelt das Anwesenheitssignal an die Auswerteeinheit (22) der Relaisstation (2). Wird vom Empfänger (21) eine neue Sensoreinheit (1) erkannt, die in den Empfangsbereich der Relaisstation (2) gelangt, übermittelt sendet die Sendeeinheit (112) der Sensoreinheit (1) ein Signal (34) an die Relaisstation (2). Dieses Signal (34) bewirkt, dass die im Alarmspeicher (111) der Sensoreinheit (1) gespeicherten Daten von der Sensoreinheit (1) mit einem Alarmspeichersignal (34) an die Auswerteeinheit (21) der Relaisstation (2) übermittelt in einem Alarmspeichertelegramm (34) den Inhalt des Alarmspeichers, der an die Auswerteeinheit (22) der Relaisstation (2) übergeben wird.

Erkennt die Auswerteeinheit (21) aus den von der Sendeeinheit (1) empfangenen Daten das Fehlen des Anwesenheitssignals (32) und/oder einen Unterbruch des Stromkreises in der Siegeleinheit (12), wird von der Relaisstationen (2) eine Alarmmeldung (35) an eines oder mehre Geräte (36) übermittelt.

Auch wenn eine Sensoreinheit (1) nicht mehr erkannt wird, d.h. wenn das Anwesenheitssignal (32) dieser Sensoreinheit (1) fehlt, gibt die Relaisstationen (2) eine Alarmmeldung (35) an die Alarmempfangsgeräte (36). Damit ist sicher gestellt, dass auch dass auch eine zerstörte oder defekte Sensoreinheit (1) erkannt wird.

Einrichtung eignet sich zum Überwachen der gegenseitigen Lage von Teilen einer Vorrichtung, der Position von Vorrichtungen, wie Türen und Deckel, von Behältern, von Gebäuden oder von Fahrzeugen und/oder zum Überwachen der örtlichen Lage von derartigen Vorrichtungen.

Die Einrichtung weist eine oder mehrere Sensoreinheiten 1 sowie eine oder mehrere Siegeleinheit 12 auf. Die Siegeleinheit 12 weist oder mehrere Leiterbahnen auf. Die Siegeleinheit 12 wird zwischen zu überwachenden Teilen und/oder zwischen Teilen und der Vorrichtung wie Behälter, Gebäude, Fahrzeug angebracht.

Eine elektronische Überwachungseinheit 11, ist mit der oder den Siegeleinheiten 12 elektrisch und mechanisch verbunden.

Weiter umfass die Einrichtung einen Sender 112 oder einen Sender-Empfänger 112. Die Überwachungseinheit 11 erzeugt ein Alarmsignal, wenn die Leiterbahn oder die Leiterbahnen einer Siegeleinheit 12 beschädigt, insbesondere unterbrochen ist, und/oder wenn die Vorrichtung mit der Sensoreinheit 1 einen vorgegebenen örtlichen Bereich verlässt.

Die Einrichtung umfasst weiter eine Relaisstation 2 mit einem Empfänger 21 für Signale 31 der Sensoreinheit 11. Die Relaisstation weist eine Auswerteeinheit 22 zum Verarbeiten und/oder zum Weiterleiten von Alarmsignalen 35 an Geräte 26 zum Empfangen der Alarmsignale 35 der Sensoreinheit 1, bzw. der Relaisstation 2.

## Patentansprüche

1. Einrichtung zum Überwachen der gegenseitigen Lage von Teilen einer Vorrichtung und/oder der Position von Vorrichtungen, insbesondere zur Überwachung von Verschlussteilen wie Türen und Deckel, von Behältern, von Gebäuden und von Fahrzeugen und/oder zur Überwachung der örtlichen Lage von derartigen Vorrichtungen,
**gekennzeichnet durch** eine Sensoreinheit (1) und mit einer Siegeleinheit (12), welche eine oder mehrere Leiterbahnen aufweist wobei die Siegeleinheit (12) dazu vorgesehen ist, zwischen zu überwachenden Teilen und/oder zwischen Teilen und der Vorrichtung wie Behälter, Gebäude, Fahrzeug angebracht zu werden,
und einer elektronischen Überwachungseinheit (11), mit welcher die Siegeleinheit (12) elektrisch und mechanisch verbunden ist,
mit einem Sender (112) oder mit einem Sender-Empfänger (112) wobei die Überwachungseinheit (11) ein Alarmsignal erzeugt, wenn die Leiterbahn oder die Leiterbahnen der Siegeleinheit (12) beschädigt, insbesondere unterbrochen ist, und/oder wenn die Vorrichtung mit der Sensoreinheit (1) einem vorgegebenen örtlichen Bereich verlässt,
und mit einer Relaisstation (2) mit einem Empfänger (21) für Signale (31) der Sensoreinheit (11) und mit einer Auswerteeinheit (22) zum Verarbeiten und/oder zum Weiterleiten von Alarmsignalen (35) an Geräte (26) zum Empfangen der Alarmsignale (35) der Sensoreinheit (1), bzw. der Relaisstation (2).

2. Einrichtung zum Überwachen nach Anspruch 1 bei welche die der Sender oder der Sender-Empfänger ein vorzugsweise periodisches Signal sendet, das von der Relaisstation (2) empfangen wird, welche das Vorhandensein dieses Signals überwacht.

3. Einrichtung zum Überwachen nach Anspruch 1 oder 2, bei welcher die Sensoreinheit (1) einen Alarmspeicher (111) aufweist, der den Zeitpunkt eines Alarms registriert, und die im Alarmspeicher (111) gespeicherten Daten abrufbar sind.

4. Einrichtung zum Überwachen nach einem der Ansprüche 1 bis 3, bei welcher die Sensoreinheit (1) dauernd ein Signal oder eine gepulstes Signal sendet, das von der Relaisstation (2) empfangen wird und die Auswerteeinheit (21) der Relaisstation ein Alarmsignal erzeugt, wenn das Signal oder die Signale der Sensoreinheit (1) ausfallen.

5. Einrichtung zum Überwachen nach einem der Ansprüche 1 bis 4, bei welcher die Auswerteeinheit (21) der Relaisstation (2) die Signale mehrerer elektronischen Sensoreinheiten empfängt und überwacht.

6. Einrichtung zum Überwachen nach einem der Ansprüche 1 bis 5, bei welcher die Auswerteeinheit (21) der Relaisstation (2) Signale (35) zu einem LAN, einem WLAN, einem Mobilfunknetz, vorzugsweise einem GPRS Mobilfunknetz, einem UMTS Mobilfunknetz, einem Modem und zu einem Festnetz, einem Schalter als Funksignal, als Licht- oder Tonsignal, sendet.

7. Verwendung einer Einrichtung zum Überwachen nach einem der Ansprüche 1 bis 6 zum Überwachen von Türen, Deckeln und anderen Verschliesseinrichtungen von Transportbehältern, Containern, Bahnwagen, Lastwagen, Türen zum Frachtraum von Flugzeugen und Schiffen und anderen Fahrzeugen, Gebäuden und geschlossenen Räumen von Gebäuden.
